# EUROPÄISCHE PATENTSCHRIFT

(11) **EP 2 291 904 B1**
(45) Veröffentlichungstag und Bekanntmachung des Hinweises auf die Patenterteilung: **12.06.2019**
(21) Anmeldenummer: 09769001.0
(22) Anmeldetag: 25.06.2009
(51) Int. Cl.: H02K 7/08, H02K 7/116, F16C 39/02, F16C 25/08

(54) **ELEKTROMOTORISCHER HILFSANTRIEB FÜR FAHRZEUGE**
ELECTRIC-MOTOR AUXILIARY DRIVE FOR VEHICLES
ENTRAINEMENT AUXILIAIRE PAR MOTEUR ELECTRIQUE POUR VEHICULES A MOTEUR

(30) Priorität: 27.06.2008 DE 102008030738
(43) Veröffentlichungstag der Anmeldung: 09.03.2011
(73) Patentinhaber: Valeo Systèmes d'Essuyage, 78322 Le Mesnil Saint Denis (FR)
(72) Erfinder: HEUBERGER, Christof, 71691 Freiberg (DE); HARTMANN, Werner, 71665 Vaihingen/Enz (DE); STEFANI, Siegfried, 71739 Oberriexingen (DE)
(74) Vertreter: Patentanwälte Behrmann Wagner PartG mbB
(86) Internationale Anmeldenummer: PCT/EP2009/004586
(87) Internationale Veröffentlichungsnummer: WO 2009/156152

(56) Entgegenhaltungen:
- EP-A1- 0 563 410
- EP-A2- 1 270 368
- DE-A1- 2 715 770
- DE-A1- 4 123 785
- DE-A1- 19 854 535
- US-A- 4 227 104
- US-A1- 2007 251 758

## Beschreibung

Die Erfindung bezieht sich auf einen elektromotorischen Hilfsantrieb für Fahrzeuge nach dem Oberbegriff des Patentanspruchs 1.

Elektromotorische Hilfsantriebe für Fahrzeuge sind in unterschiedlichen Ausführungen und für unterschiedliche Zwecke bekannt, beispielsweise als Scheibenwischerantrieb oder Motor oder aber auch als Stellantrieb zum elektrischen Verstellen von Fahrzeugsitzen, zum Öffnen und Schließen von Fahrzeugfenstern, usw.

Elektromotorische Hilfsantriebe dieser Art bestehen vielfach aus einem Elektromotor und aus einem mit diesem Motor verbundenen Getriebe, welches z.B. als Schneckengetriebe ausgebildet ist. Ein grundsätzliches Problem ist auch bei solchen Hilfsantrieben das Axialspiel insbesondere der Motor- oder Ankerwelle, die oder deren Verlängerung in der Regel zugleich auch die angetriebene Welle des Getriebes ist. Dieses Lagerspiel führt u.a. zu einem erhöhten Geräuschniveau sowie zu einem erhöhten Verschleiß mit einem möglicherweise vorzeitigen Ausfall oder Defekt des Antriebs, und zwar insbesondere auch bei reversierenden Scheibenwischerantrieben oder Motoren, d.h. bei Antrieben, deren Ausgangswelle bei eingeschaltetem Antrieb abwechselnd in einer Drehrichtung und in einer entgegengesetzten Drehrichtung umläuft.

Im einfachsten Fall wird das Axialspiel bisher bei elektromotorischen Hilfsantrieben durch eine Einstellschraube kompensiert oder aber es werden Lager mit entsprechend reduziertem Axialspiel verwendet. Diese Maßnahmen schließen allerdings nicht aus, dass es während der Lebensdauer eines Hilfsantriebes dann doch zu einer Vergrößerung des Axialspiels kommt.

Ein elektromotorischer Hilfsantrieb mit den Merkmalen des Oberbegriffs des Anspruchs 1 ist aus der DE 27 15 770 A1 bekannt. Der bekannte Hilfsantrieb weist eine Axialspiel-Kompensationseinrichtung auf, die im Wesentlichen aus zwei, mittels einer zusätzlichen Feder in eine voneinander beabstandete Position kraftbeaufschlagten Teilen besteht. Die Axialspiel-Kompensationseinrichtung stützt sich einerseits an einer Auflage bzw. einem Abschnitt eines Gehäuses ab, und wird andererseits mit dem von dem Federelement kraftbeaufschlagten Teil gegen die Stirnfläche der drehbar angeordneten Welle gedrückt. Al sNachteil ist dabei anzusehen, dass es durch die Relativbewegung zwischen der Welle und dem an der Stirnfläche der Welle anliegenden Teil der Axialspiel-Kompensationseinrichtung zu einer relaiv großen Reibung und somit zu einem Wirkungsgradverlust kommt.

Weiterhin ist aus der US 2007/0251758 A1 ein elektromotorischer Hilfsantrieb bekannt, bei der die Axialspiel-Kompensationseinrichtung in Form von mehreren Federscheiben ausgebildet ist.

Zur selbsttätigen bzw. automatischen Axialspiel-Kompensation wurde bei einem elektromotorischen Hilfsantrieb auch bereits eine Axialspiel-Kompensationseinrichtung vorgeschlagen (DE 198 54 535 A1), die im wesentlichen aus einem radial zur Welle verschiebbar angeordneten und als Keil ausgebildeten Auflaufteil besteht, welches mit einer Seite über ein Lager der Welle auf diese Welle axial einwirkt und auf einer gegenüberliegenden Seite mit einer Keilfläche gegen eine schräg zur Achse der Welle orientierte gehäuseseitige Gegenfläche anliegt. Das Anlaufelement ist durch eine Feder in einer Achsrichtung radial zur Welle vorgespannt, so dass Federkraft über die mit der schrägen gehäuseseitigen Gegenfläche zusammenwirkende Schräg- oder Keilfläche am Anlaufteil in die das Axialspiel kompensierende und auf die Welle einwirkende Axialkraft umgesetzt wird. Ein Nachteil dieser bekannten Axialspiel-Kompensationseinrichtung ist u.a. deren relativ großes Bauvolumen sowie auch der Umstand, dass sie eine spezielle Ausgestaltung des Gehäuses erfordert und damit nicht in bereits bestehenden und bewährten Konstruktionen für elektromotorische Hilfsantriebe und/oder deren Gehäuse vorgesehen werden kann.

Aufgabe der Erfindung ist es, einen elektromotorischen Hilfsantrieb mit einer Axialspiel-Kompensationseinrichtung aufzuzeigen, die sich insbesondere durch eine kompakte Bauform bei einer selbsttätigen Axialspiel-Kompensation auszeichnet, welche über die gesamte Lebensdauer des Hilfsantriebes wirksam bleibt und ein Axialspiel der betreffenden Welle wirksam verhindert.

Zur Lösung dieser Aufgabe ist ein elektromotorischer Hilfsantrieb entsprechend dem Patentanspruch 1 ausgebildet.

Weiterbildungen, Vorteile und Anwendungsmöglichkeiten der Erfindung ergeben sich auch aus der nachfolgenden Beschreibung von Ausführungsbeispielen und aus den Figuren.

Die Erfindung wurde im Folgenden anhand der Figuren an einem Ausführungsbeispiel erörtert. Dies zeigen:

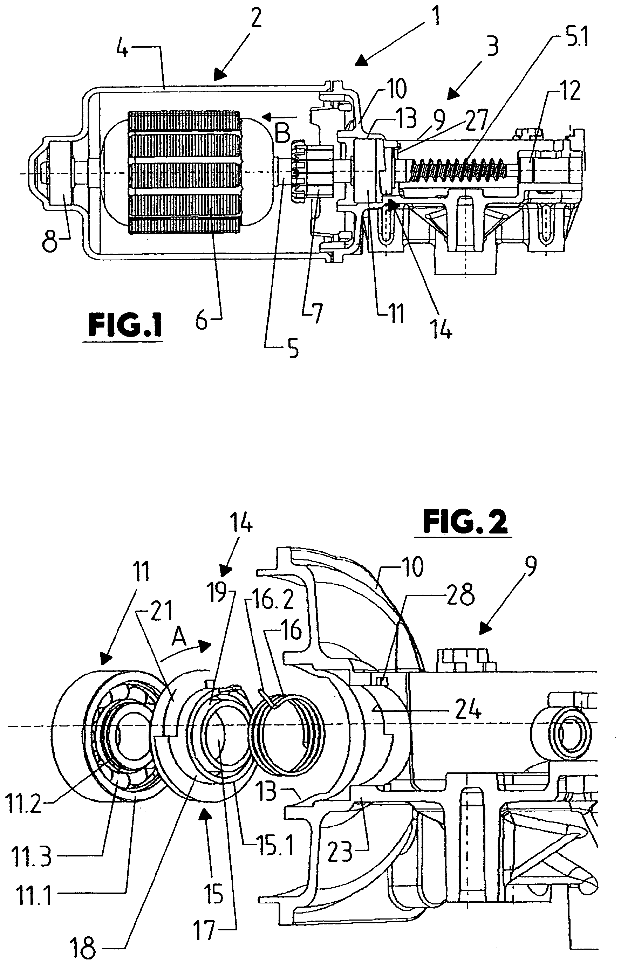

- Fig. 1: In vereinfachter Darstellung und im Schnitt einen elektromotorischen Hilfsantrieb gemäß der Erfindung;
- Fig. 2: in einer vergrößerten perspektivischen Explosionsdarstellung einen Teil des Getriebegehäuses des Hilfsantriebes der Figur 1 zusammen mit Elementen einer Axialspiel-Kompensationseinrichtung;
- Fig. 3: eine Darstellung ähnlich Figur 2, jedoch in einer anderen Blickrichtung;
- Fig. 4: ein Anlaufteil sowie eine Schenkel- bzw. Schraubenfeder der Axialspiel-Kompensationsreinrichtung.

In den Figuren ist 1 ein elektromotorischer Hilfsantrieb in Form eines Scheibenwischerantriebes. Der Hilfsantrieb 1 besteht in an sich bekannter Weise aus einem Elektromotor 2 und einem als Schneckengetriebe ausgebildeten Getriebe 3. Der Elektromotor 2 umfasst u. a. eine in einem topfförmigen Motorgehäuse 4 angeordnete Ankerwelle 5 mit einem die Ankerwicklung aufweisenden Ankerpaket 6 sowie mit einem Kommutator 7. Die Ankerwelle 5 ist mittels eines Lagers 8 im Bereich des Bodens des topfartigen Motorgehäuses 4 gelagert und erstreckt sich aus dem Innenraum des Motorgehäuses 4 in den Innenraum des Getriebes 3 bzw. eines Getriebegehäuses 9. Letzteres bildet am Übergang zum Elektromotor 2 einen Flansch 10, an dem das topfartige Motorgehäuse 4 mit seiner offenen Seite angeflanscht bzw. in geeigneter Weise befestigt ist.

Im Bereich des Flansches 10 sowie an der dem Flansch 10 abgewandten Seite des Getriebegehäuses 9 sind weitere Lager 11 bzw. 12 für die Ankerwelle 5 am Getriebegehäuse 9 vorgesehen. Zwischen den beiden Lagern 11 und 12 ist die Ankerwelle 5 am Abschnitt 5.1 als Schnecke ausgebildet, die mit einem nicht dargestellten Getriebe- oder Schneckenrad des Getriebes 3 zusammenwirkt.

Die Lager 8 und 11 sind bei der dargestellten Ausführungsform so ausgebildet, dass sie zusätzlich zu einer radialen Abstützung auch eine axiale Abstützung der Ankerwelle 5 bewirken, während das Lager 12 lediglich aus Radiallager ausgeführt ist.

Zumindest das Lager 11, bevorzugt aber auch die Lager 8 und 12 sind Kugellager. In diesem Sinne besteht das Lager 11 aus einem äußeren ringförmigen Lagerring oder Lagerelement 11.1, der in einer im Bereich des Flansches 10 gebildeten und an die kreiszylinderförmige Außenfläche des Lagerelementes 11.1 angepassten Lageröffnung 13 angeordnet ist, aus einem inneren Lagerring oder Lagerelement 11.2, welches fest und gegen eine Axialbewegung gesichert auf der Ankerwelle 5 diese umschließen vorgesehen ist, sowie aus den zwischen den Lagerelementen 11.1 und 11.2 in dort gebildeten Kugelbahnen angeordneten Kugeln 11.3.

Dem Lager 11, welches in der Lageröffnung 13 axial, d. h. in Richtung der Achse der Ankerwelle 5 beweglich angeordnet ist, ist eine Axialspiel-Kompensationseinrichtung 14 zugeordnet, die u. a. aus einem ringförmigen Anlaufteil 15 und aus einer gewendelten Schenkel- oder Torsionsfeder 16 besteht. Das Anlaufteil ist von einem eine Ringöffnung 17 aufweisenden Ringkörper 18 gebildete, der eine die Ringöffnung 17 umschließende und an der Stirnseite 15.1 des Anlaufteils 15 offene Ringnut 19 aufweist, die für eine zumindest teilweise Aufnahme der Schenkel- oder Torsionsfeder 16 dient. An der anderen Stirnseite 15.2 ist das ringförmige Anlaufteil 15 mit einem überstehenden flanschartigen Abschnitt 20 versehen, der an seiner der Stirnseite 15.1 zugewandten Seite mit zwei punktsymmetrischen schrägen Flächen 21 ausgebildet ist, die sich jeweils schraubenförmig über einen Winkelbereich von etwa 180 Grad um die Achse des ringförmigen Anlaufteils 15 erstrecken, und zwar in der Weise, dass in einer angenommenen Drehrichtung um diese Achse der Abstand jeder Schrägfläche von der Stirnseite 15.2 des Anlaufteils 15 gleichsinnig zunimmt oder abnimmt.

Im montierten Zustand ist die Ankerwelle 5 mit ausreichend großem Spiel durch die Ringöffnung 17 hindurchgeführt und ein Ende 16.1 des teilweise in der Ringnut 19 aufgenommenen und die Ankerwelle 5 mit Abstand umschließenden Torsionsfeder 16 in einer Nut 22 des Anlaufteils 15 eingehängt. Das um die Achse der Ankerwelle schwenkbare Anlaufteil 15 ist weiterhin so angeordnet, dass es mit seiner Stirnfläche 15.1 nur gegen das äußere bzw. gehäuseseitige Lagerelement 11.1 anliegt, und zwar an der dem Getriebe 3 bzw. dem Getriebeinnenraum zugewandten Seite des Lagerelementes 11.1.

Den Schrägflächen 21 sind an dem Getriebegehäuse 9 im Bereich der Lageröffnung 13 bzw. an einem dortigen, in die Lageröffnung etwas vorstehenden Abschnitt oder Bund 23 zwei Anlageflächen 24 zugeordnet, die ebenfalls als Schrägflächen ausgebildet sind, und zwar komplementär zu den Schrägflächen 21, so dass bei gegen die Anlage- oder Schrägflächen 24 anliegenden Schrägflächen 21 durch Drehen des Anlaufteils 15 um die Achse der Ankerwelle 5 (Pfeil A) unter Keil- oder Schraubenwirkung eine axiale Verschiebung des Lagers 11 und damit auch eine axiale Verschiebung der Ankerwelle 5 in Richtung auf den Boden des Motorgehäuses 4, d. h. in Richtung des Pfeils B erfolgen, und zwar zur Beseitigung eines evtl. vorhandenen Axialspiels der Ankerwelle 5.

Die Torsionsfeder 16 ist mit ihrem anderen Ende 16.1 in einer Nut 25 am Getriebegehäuse 9 eingehängt und so vorgespannt, dass sie während der Lebensdauer des elektromotorischen Hilfsantriebes 1 ständig ein Moment in Richtung des Pfeils A auf das Anlaufteil 15 ausübt und hierdurch mit der Axialspiel-Kompensationseinrichtung 14 ständig eine automatische Kompensation des Axialspiels der Ankerwelle 6 erreicht bzw. aufrecht erhalten ist.

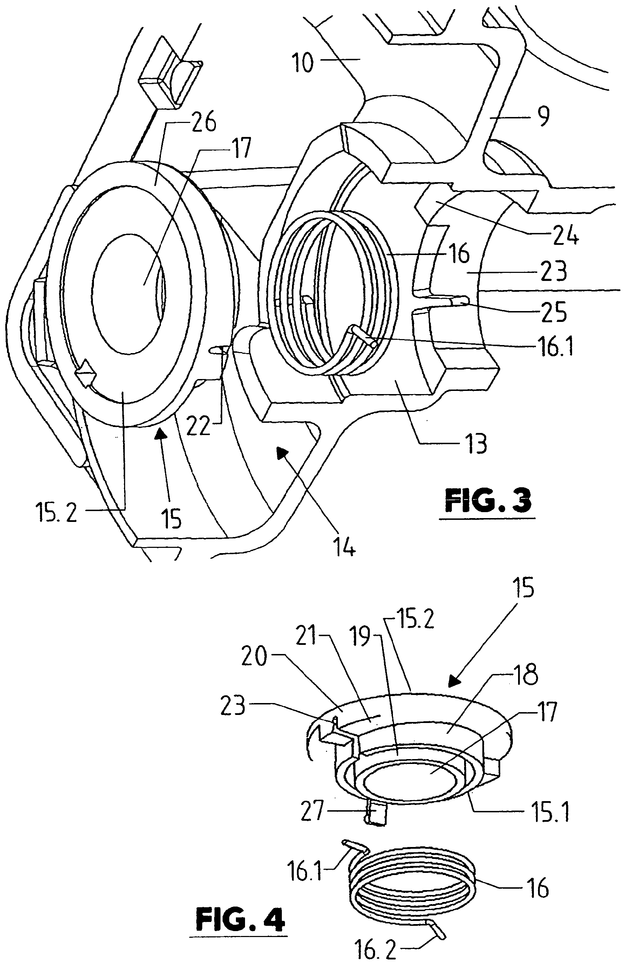

Wie insbesondere in der Figur 3 dargestellt, ist das Anlaufteil 5 an seiner mit dem Lager 11 bzw. mit dem Lagerelement 11.1 zusammenwirkenden Stirnseite 15. 1 mit einem über diese Stirnseite wegstehenden äußeren Rand 26 versehen. Durch diesen Rand ist gewährleistet, dass das Anlaufteil 15 tatsächlich für die angestrebte automatische Kompensation des Axialspiels der Ankerwelle 5 nur gegen das gehäuseseitige Lagerelement 11.1 anliegt.

Um die Montage zu erleichtern, ist das Anlaufteil 15 bei der dargestellten Ausführungsform weiterhin mit einem über die Stirnseite 15.1 wegstehenden Schnapphaken 27 ausgebildet, der bei bespannter Torsionsfeder 16 an einer zugehörigen Rast 28 am Getriebegehäuse 9 verrastet und dadurch den gespannten Zustand der Torsionsfeder 16 bis zum Abschluss der Montage die Ankerwelle 5 aufrecht erhält.

Die Besonderheit der Axialspiel-Kompensationseinrichtung 15 besteht u.a. darin, dass sie bei reduzierter Baugröße bzw. bei reduziertem Bauvolumen eine wirksame Kompensation des Axialspiels der Ankerwelle 5 ermöglicht, und zwar durch eine Übersetzung der Torsionskraft der Torsionsfeder 16 über die Keil- oder Schrägflächen 21 und 24 in die auf die Ankerwelle einwirkende axiale Kraft. Weiterhin wird über die Schrägflächen 21 und 24 eine selbsthemmende Wirkung in der Form erreicht, dass eine einmal vorgenommene Kompensation des Axialspiels auch bei einer reversierenden, d.h. sich in der Drehrichtung ändernden Drehbewegung der Ankerwelle 5 nicht verloren geht.

Durch die Ausbildung der Axialspiel-Kompensationseinrichtung 14 sowie insbesondere auch durch deren geringe Baugröße kann diese Einrichtung in dem jeweiligen Hilfsantrieb 1 bzw. in dessen Getriebegehäuse 9 ohne eine grundlegende Änderung einer für den Hilfsantrieb bereits bestehenden Formgebung und/oder Konstruktion vorgesehen werden.

Das Anlaufteil 15 ist bevorzug ein Formteil, beispielsweise ein Formteil aus einem geeigneten Kunststoff oder aus einem anderen für Anlaufteile geeigneten Material, beispielsweise Sintermetall.

Die Erfindung wurde voranstehend an einem Ausführungsbeispiel beschrieben. Es versteht sich, dass Änderungen sowie Abwandlungen möglich sind, ohne dass dadurch der der Erfindung zugrunde liegende Gedanke verlassen wird.

So wurde die Erfindung vorstehend anhand des Hilfsantriebes 1 bzw. in Zusammenwirken mit dem am Übergang zwischen dem Elektromotor 2 und dem Getriebe 3 vorgesehenen Lager 11 erläutert. Selbstverständlich kann die erfindungsgemäße Axialspiel-Kompensationseinrichtung 14 auch an einem anderen Lager und/oder an einer anderen Welle verwendet sein, die nicht die Ankerwelle eines elektromotorischen Hilfsantriebes ist.

### Bezugszeichenliste

- 1: Hilfsantrieb
- 2: Elektromotor
- 3: Getriebe
- 4: Motorgehäuse
- 5: Ankerwelle
- 6: Ankerpaket mit Ankerwicklung
- 7: Kommutator
- 8: Lager
- 9: Getriebegehäuse
- 10: Flansch
- 11, 12: Lager
- 11.1, 11.2: Lagerelement
- 11.3: Kugel- oder Welzkörper des Lagers 11
- 13: Lageröffnung
- 14: Axialspiel-Kompensationseinrichtung
- 15: Anlaufteil
- 15.1, 15.2: Stirnseite des Anlaufteils 15
- 16: Schenkel- oder Torsionsfeder
- 16.1, 16.2: Federende
- 17: Ringöffnung
- 18: Ringkörper
- 19: Ringnut
- 20: Flansch
- 21: Schrägfläche
- 22: Nut
- 23: Bund
- 24: Anlage- oder Schrägfläche
- 25: Nut
- 26: ringartiger Vorsprung an Stirnseite 15.2
- 27: Schnapphacken
- 28: Rast
- A: Moment durch Torsionsfeder 16
- B: axiale Bewegung zur Beseitigung des Axialspiels

## Patentansprüche

1. Elektromotorischer Hilfsantrieb für Fahrzeuge mit wenigstens einer in einem Gehäuse (4, 9) drehbar gelagerten Welle (5), mit einer Axialspiel-Kompensationseinrichtung (14) mit wenigstens einem Anlaufteil (15), welches einen Ringkörper (18) aufweist und mit wenigstens einer Anlagefläche (21) gegen wenigstens eine gehäuseseitige Gegenfläche (24) anliegt, relativ zur Welle (5) bewegbar mit der Federkraft wenigstens eines als Schenkel- oder Torsionsfeder gebildeten Federelementes (16) beaufschlagt ist und hierdurch auf die Welle (5) eine das Axialspiel kompensierende axiale Kraft ausübt, wobei die wenigstens eine Anlagefläche (21) und/oder die wenigstens eine gehäuseseitige Gegenfläche (24) als gegenüber der Achse der Welle (5) geneigte Schrägfläche ausgeführt ist, wobei das Anlaufteil (15) um die Achse der Welle (5) oder um eine parallel zur Achse der Welle (5) orientierte Schwenkachse dreh- oder schwenkbar vorgesehen ist, wobei die wenigstens eine Schrägfläche eine die Achse der Welle (5) zumindest auf einem Teilbereich umschließende Schräg- oder Schraubenfläche ist, und wobei das wenigstens eine Federelement (16) zur Beaufschlagung des Anlaufteils (15) mit einer Torsionskraft bzw. Drehmoment um die Schwenkachse des Anlaufteils (15) ausgebildet ist, wobei das Anlaufteil (15) über ein Lager (11) auf die Welle (5) einwirkt, wobei das Lager (11) ein die Welle (5) im Gehäuse (4, 9) lagerndes Lager ist,
**dadurch gekennzeichnet, dass**
das mit dem Anlaufteil (15) zusammenwirkende Lager (11) axial beweglich am Gehäuse (4, 9) angeordnet ist, dass das mit dem Anlaufteil (15) zusammenwirkende Lager (11) ein Wälz- oder Kugellager mit wenigstens zwei ringartigen Lagerelementen (11,1, 11.2) ist, von denen ein Lagerelement (11.2) auf der Welle (5) axial gesichert vorgesehen ist, dass das Anlaufteil (15) auf das andere Lagerteil (11.1) einwirkt, dass das Anlaufteil (15) ringartig, die Welle (5) umschließend ausgebildet ist und an einer radial zur Achse des Anlaufteils (15) orientierten Fläche, beispielsweise an einer Stirnfläche oder an einer Fläche eines über den restlichen Ringkörper wegstehenden Flansches (20) die wenigstens eine Anlagefläche (21) aufweist, dass das Anlaufteil (15) einen über eine Stirnseite des Anlaufteils (15) wegstehenden äußeren Rand (26) aufweist, der ausschließlich gegen ein gehäuseseitiges Lagerelement (11.1) anliegt, und dass das wenigstens eine Federelement (16) zwischen dem Anlaufteil (15) und dem Gehäuse (9) oder einem die wenigstens eine Gegenfläche (24) aufweisenden Teil (10) des Gehäuses (4, 9) wirkt.

2. Elektromotorischer Hilfsantrieb nach Anspruch 1, **dadurch gekennzeichnet, dass** das Anlaufteil (15) mit einer Ringnut (19) für eine zumindest teilweise Aufnahme des Federelementes (16) ausgeführt ist.

3. Elektromotorischer Hilfsantrieb nach Anspruch 1 oder 2, **dadurch gekennzeichnet, dass** die Schenkel- oder Torsionsfeder (16) die Welle (5) umschließend angeordnet ist.

4. Elektromotorischer Hilfsantrieb nach einem der vorhergehenden Ansprüche, **dadurch gekennzeichnet, dass** die Welle (5) durch ein weiteres Lager oder Lagerelement (8) gegen die von dem wenigstens einem Anlaufteil (15) erzeugte axiale Kraft abgestützt ist.

5. Elektromotorischer Hilfsantrieb nach einem der vorhergehenden Ansprüche, **dadurch gekennzeichnet, dass** die Welle (5) die Ankerwelle eines Elektromotors (2) oder eine Verlängerung dieser Ankerwelle ist, die in das Gehäuse (9) eines mit dem Motor (2) verbundenen Getriebes (3) hineinreicht.

6. Elektromotorischer Hilfsantrieb nach Anspruch 5, **dadurch gekennzeichnet, dass** die Axialspiel-Kompensationseinrichtung bzw. das wenigstens eine Anlaufteil (15) sowie das mit diesem Anlaufteil zusammenwirkende Lager (11) am Übergang zwischen dem Motor (2) und dem Getriebe (4) im Motorgehäuse (4) oder im Getriebegehäuse (9) angeordnet sind.

7. Elektromotorischer Hilfsantrieb nach einem der vorhergehenden Ansprüche, **dadurch gekennzeichnet, dass** das Anlaufteil (15) einen Schnapphaken (27) aufweist, der bei gespannter Schenkel- oder Torsionsfeder (16) mit einer Rast (28) an dem Getriebegehäuse (9) zusammenwirkt.

## Claims

1. Electromotive auxiliary drive for vehicles having at least one shaft (5) which is mounted rotatably in a housing (4, 9), having an axial play compensation device (14) with at least one run-on part (15) which has a ring body (18), bears with at least one bearing face (21) against at least one housing-side counter-face (24), is loaded with the spring force of at least one spring element (16) which is formed as a leg or torsion spring such that it can be moved relative to the shaft (5), and, as a result, exerts an axial force which compensates for the axial play on the shaft (5), the at least one bearing face (21) and/or the at least one housing-side counter-face (24) being configured as an oblique face which is inclined with respect to the axis of the shaft (5), the run-on part (15) being provided such that it can be rotated or pivoted about the axis of the shaft (5) or about a pivot axis which is oriented parallel to the axis of the shaft (5), the at least one oblique face being an oblique or helical face which encloses the axis of the shaft (5) at least on a part region, and the at least one spring element (16) being configured to load the run-on part (15) with a torsional force or torque about the pivot axis of the run-on part (15), the run-on part (15) acting via a bearing (11) on the shaft (5), the bearing (11) being a bearing which mounts the shaft (5) in the housing (4, 9), **characterized in that** the bearing (11) which interacts with the run-on part (15) is arranged on the housing (4, 9) in an axially movable manner, **in that** the bearing (11) which interacts with the run-on part (15) is an anti-friction or ball bearing with at least two ring-like bearing elements (11.1, 11.2), of which one bearing element (11.2) is provided in an axially secured manner on the shaft (5), **in that** the run-on part (15) acts on the other bearing part (11.1), **in that** the run-on part (15) is of ring-like configuration so as to enclose the shaft (5) and has the at least one bearing face (21) on a face which is oriented radially with respect to the axis of the run-on part (15), for example on an end face or on a face of a flange (20) which protrudes beyond the remaining ring body, **in that** the run-on part (15) has an outer edge (26) which protrudes beyond an end side of the run-on part (15) and bears exclusively against a housing-side bearing element (11.1), and **in that** the at least one spring element (16) acts between the run-on part (15) and the housing (9) or a part (10) of the housing (4, 9), which part (10) has the at least one counter-face (24).

2. Electromotive auxiliary drive according to Claim 1, **characterized in that** the run-on part (15) is configured with a ring groove (19) for at least partially receiving the spring element (16).

3. Electromotive auxiliary drive according to Claim 1 or 2, **characterized in that** the leg or torsion spring (16) is arranged so as to enclose the shaft (5).

4. Electromotive auxiliary drive according to one of the preceding claims, **characterized in that** the shaft (5) is supported by way of a further bearing or bearing element (8) against the axial force which is generated by the at least one run-on part (15).

5. Electromotive auxiliary drive according to one of the preceding claims, **characterized in that** the shaft (5) is the armature shaft of an electric motor (2) or an extension of the said armature shaft which reaches into the housing (9) of a transmission (3) which is connected to the motor (2).

6. Electromotive auxiliary drive according to Claim 5, **characterized in that** the axial play compensation device and/or the at least one run-on part (15) and the bearing (11) which interacts with the said run-on part are arranged at the transition between the motor (2) and the transmission (4) in the motor housing (4) or in the transmission housing (9).

7. Electromotive auxiliary drive according to one of the preceding claims, **characterized in that** the run-on part (15) has a snap-in hook (27) which interacts with a catch (28) on the transmission housing (9) in the case of a stressed leg or torsion spring (16).

## Revendications

1. Entraînement auxiliaire par moteur électrique pour véhicules à moteur avec au moins un arbre (5) disposé de façon à pouvoir tourner dans un carter (4, 9), avec un dispositif de compensation de jeu axial (14) doté d'au moins une partie de lancement (15) comportant un corps annulaire (18) et pouvant être déplacé par rapport à l'arbre (5) avec au moins une surface de butée (21) butant contre au moins une contre-surface (24) du côté de carter et sollicité par la force de ressort d'au moins un élément de ressort (16) prenant la forme d'un ressort à branches ou à torsion et exerçant ainsi sur l'arbre (5) une force axiale compensant le jeu axial, l'au moins une surface de butée (21) et/ou l'au moins une contre-surface (24) située du côté de carter étant réalisée sous la forme d'une surface oblique inclinée par rapport à l'axe de l'arbre (5), la partie de lancement (15) étant prévue de façon à pouvoir tourner ou pivoter autour de l'axe de l'arbre (5) ou autour d'un axe de pivotement orienté parallèlement à l'axe de l'arbre (5), l'au moins une surface oblique étant une surface oblique ou de vissage entourant l'axe de l'arbre (5) au moins sur une zone partielle et l'au moins un élément de ressort (16) étant réalisé de façon à solliciter la partie de lancement (15) avec une force de torsion et/ou un moment de rotation autour de l'axe de pivotement de la partie de lancement (15), la partie de lancement (15) agissant sur l'arbre (5) via un palier de roulement (11), le palier de roulement (11) étant un palier de roulement logeant l'arbre (5) dans le carter (4, 9) ; **caractérisé en ce que** :
le palier de roulement (11) interagissant avec la partie de lancement (15) est disposé de façon mobile dans le plan axial au niveau du carter (4, 9), que le palier de roulement (11) interagissant avec la partie de lancement (15) est un palier à rouleau ou un palier de roulement sphérique avec au moins deux éléments de palier de roulement (11,1, 11.2) de type annulaire parmi lesquels un élément de palier de roulement (11.2) est fixé sur l'arbre (5) dans le plan axial, que la partie de lancement (15) agit sur l'autre partie de palier de roulement (11.1), que la partie de lancement (15) est réalisée de façon annulaire de façon à entourer l'arbre (5) et comporte, au niveau d'une surface orientée dans le plan radial par rapport à l'axe de la partie de lancement (15), par exemple au niveau d'une surface avant ou au niveau d'une surface d'une bride (20) saillant au-delà du reste du corps annulaire, l'au moins une surface de butée (21), que la partie de lancement (15) comporte une bordure (26) extérieure saillant au-delà d'un côté avant de la partie de lancement (15) butant uniquement contre un élément de palier de roulement (11.1) du côté de carter et que l'au moins un élément de ressort (16) agit entre la partie de lancement (15) et le carter (9) ou une partie (10) du carter (4, 9) comportant l'au moins une contre-surface (24).

2. Entraînement auxiliaire par moteur électrique selon la revendication 1, **caractérisé en ce que** la partie de lancement (15) est réalisée avec une rainure annulaire (19) pour loger au moins en partie l'élément de ressort (16).

3. Entraînement auxiliaire par moteur électrique selon la revendication 1 ou 2, **caractérisé en ce que** le ressort à branches ou à torsion (16) est disposé de façon à entourer l'arbre (5).

4. Entraînement auxiliaire par moteur électrique selon l'une quelconque des revendications précédentes, **caractérisé en ce que** l'arbre (5) est appuyé par un palier de roulement supplémentaire ou un élément de palier de roulement (8) contre la force axiale produite par l'au moins une partie de lancement (15).

5. Entraînement auxiliaire par moteur électrique selon l'une quelconque des revendications précédentes, **caractérisé en ce que** l'arbre (5) est l'axe de balancier d'un moteur électrique (2) ou un prolongement de cet axe de balancier passant dans le carter (9) d'une boîte de vitesses (3) reliée au moteur (2).

6. Entraînement auxiliaire par moteur électrique selon la revendication 5, **caractérisé en ce que** le dispositif de compensation de jeu axial et/ou l'au moins une partie de lancement (15) ainsi que le palier de roulement (11) interagissant avec cette partie de lancement sont disposés au niveau de la transition entre le moteur (2) et la boîte de vitesses (4), dans le carter de moteur (4) ou dans le carter de boîte de vitesses (9).

7. Entraînement auxiliaire par moteur électrique selon l'une quelconque des revendications précédentes, **caractérisé en ce que** la partie de lancement (15) comporte un crochet à cliquet (27) interagissant avec un encliquetage (28) au niveau du carter de boîte de vitesses (9) lorsque le ressort à branches ou à torsion (16) est tendu.
